# EUROPEAN PATENT APPLICATION

(11) **EP 4 560 070 A1**
(43) Date of publication of application: **28.05.2025**
(21) Application number: 24214079.6
(22) Date of filing: 20.11.2024
(51) Int. Cl.: D06P 1/44, B41J 3/407, B41M 5/00, C09D 11/322, C09D 11/54, D06P 1/52, D06P 1/673, D06P 5/08, D06P 5/20, D06P 5/30, D06P 5/00

(54) **INK-JET TEXTILE PRINTING METHOD AND RECORDING DEVICE**

(30) Priority: 24.11.2023 JP 2023198915
(71) Applicant: Seiko Epson Corporation, Tokyo 160-8801 (JP)
(72) Inventor: KONDO, Takamitsu, Suwa-shi, Nagano, 392-8502 (JP); SASAKI, Tsuneyuki, Suwa-shi, Nagano, 392-8502 (JP); NAKAGAWA, Shigenori, Suwa-shi, Nagano, 392-8502 (JP); HOSHII, Jun, Suwa-shi, Nagano, 392-8502 (JP)
(74) Representative: MERH-IP Matias Erny Reichl Hoffmann Patentanwälte PartG mbB

(57) **Abstract**

A method for recording on a fabric that includes attaching a droplet of a treatment liquid to the fabric, the treatment liquid containing a coagulant that coagulates an ink composition containing pigment and an overcoat liquid containing resin, attaching a droplet of the ink composition to the fabric, and attaching the overcoat liquid to the fabric, wherein a treatment droplet amount being a weight of the droplet of the treatment liquid is equal to or less than an ink droplet amount being a weight of the droplet of the ink composition.

## Description

The present application is based on, and claims priority from JP Application Serial Number 2023-198915, filed November 24, 2023, the disclosure of which is hereby incorporated by reference herein in its entirety.

### BACKGROUND

### 1. Technical Field

The present disclosure relates to a recording method and a recording device.

### 2. Related Art

For example, as described in JP 2016-089288 A, there is an ink jet textile printing method which is an example of a recording method for recording on a fabric by an ink jet method. In the ink jet textile printing method, a pretreatment liquid, which is an example of a treatment liquid, is attached to a fabric, and then an ink composition is attached to the fabric. The ink composition contains pigment and resin. The ink composition reacts with the pretreatment liquid and is coagulated.

The resin contained in the ink composition of JP 2016-089288 A enhances adhesion between the pigment and the fabric. However, the ink composition containing the resin has high viscosity. When the ink composition having high viscosity is ejected from a nozzle, the nozzle is likely to be clogged. When the nozzle is clogged, recording quality is deteriorated.

The resin can be caused to be contained in, for example, an overcoat liquid separately from the ink composition. The viscosity of the ink composition can be lowered by not being caused to contain the resin. However, the ink composition having low viscosity is likely to penetrate deep into the fabric. When the ink composition coagulates deep inside the fabric, color developability is lowered and the recording quality is deteriorated.

### SUMMARY

A recording method for solving the above-described problems is a method for recording on a fabric, the recording method including attaching a droplet of a treatment liquid to the fabric, the treatment liquid containing a coagulant that coagulates an ink composition containing pigment and an overcoat liquid containing resin, attaching a droplet of the ink composition to the fabric, and attaching the overcoat liquid to the fabric, wherein a treatment droplet amount being a weight of the droplet of the treatment liquid is equal to or less than an ink droplet amount being a weight of the droplet of the ink composition.

A recording device for solving the above-described problems includes an ejecting unit configured to eject a droplet of an ink composition containing pigment, wherein the ejecting unit is configured to eject a droplet of a treatment liquid containing a coagulant, the coagulant coagulates the ink composition and an overcoat liquid containing resin, a treatment droplet amount being a weight of the droplet of the treatment liquid is equal to or less than an ink droplet amount being a weight of the droplet of the ink composition, and the treatment liquid, the ink composition, and the overcoat liquid are attached to a fabric in this order.

### BRIEF DESCRIPTION OF THE DRAWINGS

FIG. 1 is a schematic diagram of a first embodiment of a recording device.
FIG. 2 is a schematic plan diagram of a liquid ejecting unit.
FIG. 3 is a schematic cross-sectional view of a yarn constituting a fabric.
FIG. 4 is a schematic cross-sectional view of the yarn to which a treatment liquid is attached.
FIG. 5 is a schematic cross-sectional view of the yarn to which an ink composition is attached.

### DESCRIPTION OF EMBODIMENTS

### First Embodiment

A first embodiment of a recording method and a recording device will be described below with reference to the drawings. The recording device is an ink jet-type printer that records images such as letters and photographs by ejecting an ink composition onto a fabric, for example.

In the drawings, a Z-axis represents a direction of gravity, and X- and Y-axes represent directions along a horizontal plane, assuming that a recording device 11 is placed on the horizontal plane. The X-axis, the Y-axis, and the Z-axis are perpendicular to one another.

### Recording Device

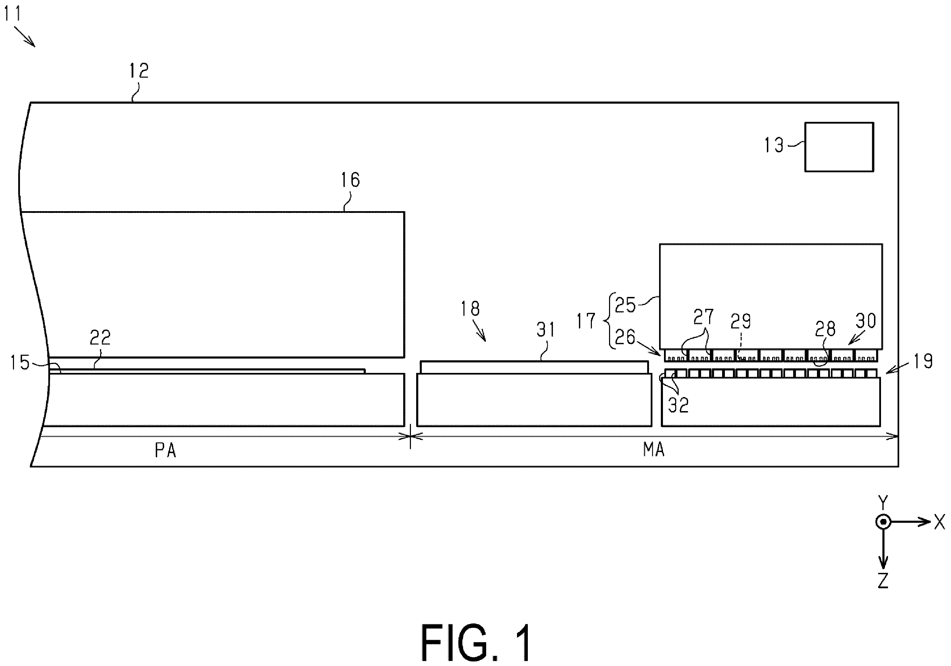

As illustrated in FIG. 1, the recording device 11 may include a housing 12. The housing 12 accommodates various configurations included in the recording device 11.

The recording device 11 may include a control unit 13. The control unit 13 integrally controls driving of each mechanism in the recording device 11. The control unit 13 controls various types of operation performed by the recording device 11.

The control unit 13 can be configured as a circuit including α: one or more processors that execute various processes in accordance with a computer program, β: one or more dedicated hardware circuits that execute at least some of the various processes, or γ: a combination thereof. The hardware circuit is, for example, an application specific integrated circuit. The processor includes a CPU and a memory such as a RAM and a ROM, and the memory holds program codes or commands configured to cause the CPU to execute processing. The memory, i.e., a computer readable medium includes any readable mediums that can be accessed by general-purpose or dedicated computers.

The recording device 11 may include a transporting belt 15, a drying unit 16, a liquid ejecting unit 17, a wiping unit 18, and a capping unit 19.

The transporting belt 15 and the drying unit 16 may be provided in a recording area PA. The recording area PA is an area where recording is performed on a fabric 22. The wiping unit 18 and the capping unit 19 may be provided in a maintenance area MA. The maintenance area MA is an area where maintenance of the liquid ejecting unit 17 is performed. The recording area PA and the maintenance area MA are provided side by side in a scanning direction X. The scanning direction X may be a direction parallel to the X-axis.

The transporting belt 15 is configured to support the fabric 22. The transporting belt 15 is a circular belt, for example. The transporting belt 15 rotates to transport the fabric 22 in a transport direction Y. The transport direction Y may be a direction parallel to the Y-axis.

The drying unit 16 may be provided at at least one of an upstream position and a downstream position in the transport direction Y with respect to the liquid ejecting unit 17. The drying unit 16 dries the recorded fabric 22. The drying unit 16 may include a heater (not illustrated). The drying unit 16 may heat the fabric 22. The drying unit 16 may promote drying of the recorded fabric 22 by heating the fabric 22 before recording in advance. The drying unit 16 may heat the recorded fabric 22. The drying unit 16 may heat at least one of a front surface and a back surface of the fabric 22. The drying unit 16 may apply warm air to the fabric 22.

The liquid ejecting unit 17 is capable of ejecting liquid onto the fabric 22 being transported. The liquid ejecting unit 17 may include a carriage 25 and an ejecting unit 26. The ejecting unit 26 is mounted at the carriage 25.

The carriage 25 can reciprocate in the scanning direction X. The carriage 25 moves the ejecting unit 26 over the recording area PA and the maintenance area MA.

The ejecting unit 26 may include one or more heads 27. The head 27 includes a nozzle surface 28. A plurality of nozzles 29 open at the nozzle surface 28. The liquid ejecting unit 26 is capable of ejecting liquid from each nozzle 29 in an ejection direction Z. The ejection direction Z may be a direction perpendicular to the nozzle surface 28. The ejection direction Z may be a direction parallel to the Z-axis.

Among the plurality of nozzles 29, a group of the nozzles 29 that eject the same type of liquid are also referred to as a nozzle group 30. The liquid ejecting unit 17 includes a plurality of the nozzle groups 30. The plurality of nozzle groups 30 may eject different liquids respectively. At least two of the plurality of nozzle groups 30 may eject the same liquid.

The wiping unit 18 is configured to wipe the nozzle surface 28. The wiping unit 18 may include a wiping portion 31. The wiping portion 31 may wipe the plurality of heads 27 one by one, or collectively. The wiping portion 31 may be, for example, a strip-shaped member capable of absorbing liquid. The wiping unit 18 may perform wiping by reciprocating the wiping portion 31 in the transport direction Y.

The capping unit 19 includes one or more caps 32. The capping unit 19 may include a plurality of the caps 32 for one head 27. The capping unit 19 may include the same number of caps 32 as the heads 27, or may include one cap 32 for a plurality of the heads 27.

The capping unit 19 moves the cap 32 to a separated position illustrated in FIG. 1 and to a capping position (not illustrated). The capping position is a position where the cap 32 caps the head 27.

The head 27 is configured to eject liquid. The head 27 performs scanning for the fabric 22. The head 27 performs recording on the fabric 22 in the recording area PA. The head 27 performs recording on the fabric 22 supported by the transporting belt 15 by ejecting liquid while moving in the scanning direction X. The head 27 ejects the liquid onto the fabric 22 in a state in which transport is stopped. The recording device 11 of the present embodiment is a serial printer.

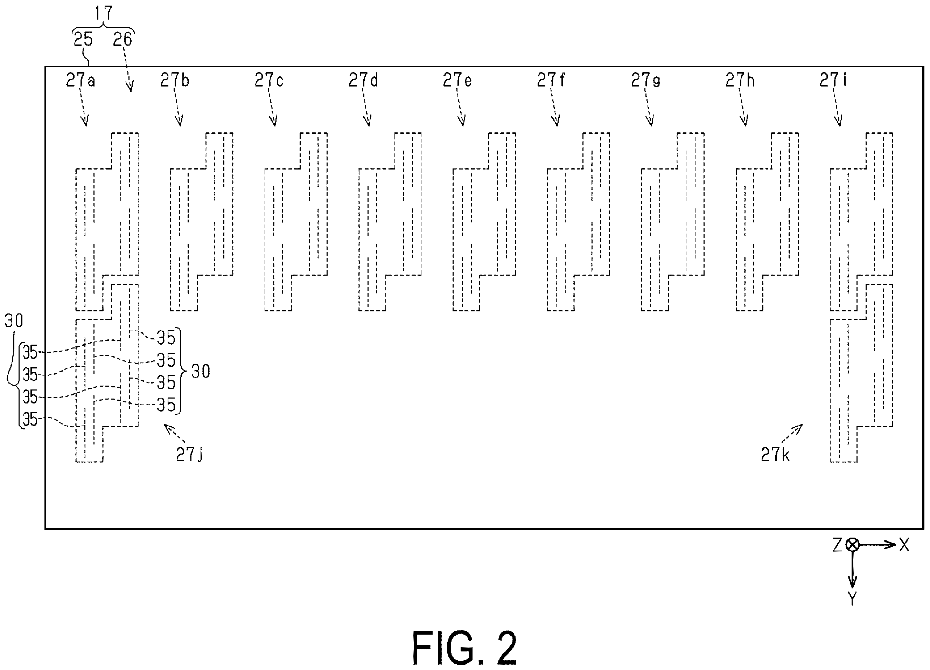

As illustrated in FIG. 2, the liquid ejecting unit 17 of the present embodiment includes eleven heads 27. When distinguished from each other, the plurality of heads 27 are also referred to as a first head 27a to an eleventh head 27k. The first head 27a to the ninth head 27i may be provided side by side in the scanning direction X. The tenth head 27j and the eleventh head 27k may be provided side by side in the scanning direction X. The tenth head 27j and the eleventh head 27k may be provided downstream of the first head 27a to the ninth head 27i in the transport direction Y. The first head 27a and the tenth head 27j may be provided side by side in the transport direction Y. The ninth head 27i and the eleventh head 27k may be provided side by side in the transport direction Y.

The nozzle group 30 may include one or more nozzle rows 35. The nozzle row 35 is constituted by a plurality of the nozzles 29 aligned in the transport direction Y. In the present embodiment, the nozzle group 30 is constituted by four nozzle rows 35. The four nozzle rows 35 that constitute one nozzle group 30 are located to be shifted from each other in the scanning direction X and the transport direction Y.

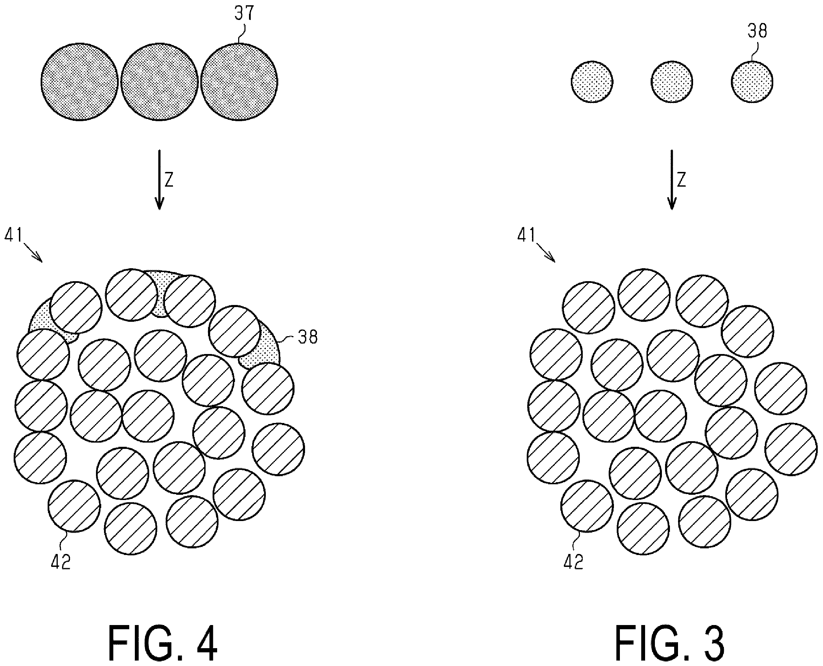

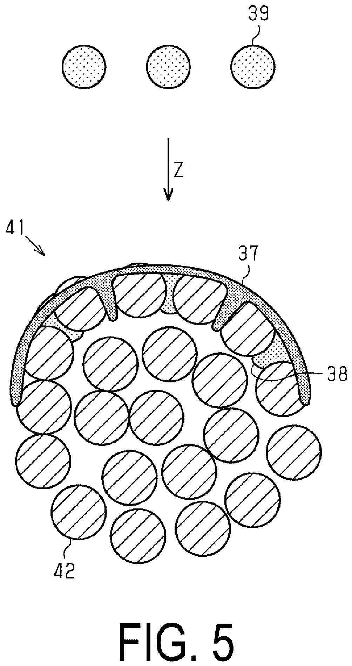

For example, each of the first head 27a to the fourth head 27d and the sixth head 27f to the ninth head 27i can eject a droplet of an ink composition 37 illustrated in FIG. 4. For example, the fifth head 27e can eject a droplet of a treatment liquid 38 illustrated in FIG. 3. For example, each of the tenth head 27j and the eleventh head 27k can eject a droplet of an overcoat liquid 39 illustrated in FIG. 5. That is, the ejecting unit 26 can eject a droplet of each of the treatment liquid 38, the ink composition 37, and the overcoat liquid 39.

The ejecting unit 26 may be capable of changing a weight of a droplet to eject. The ejecting unit 26 may change a weight of a droplet in a stepwise manner. The ejecting unit 26 of the present embodiment is capable of ejecting three types of droplets for a small dot, a medium dot, and a large dot. The droplet for the small dot is smaller in weight than the droplet for the medium dot. The droplet for the large dot is smaller in weight than the droplet for the medium dot.

### Ink Composition

The ink composition 37 contains pigment. The pigment is a kind of coloring material. The ink composition 37 is a liquid for applying color to the fabric 22. For example, the ejecting unit 26 may eject a plurality of types of the ink composition 37 having different colors. Each head 27 may eject a plurality of types of the ink composition 37. The ink composition 37 may contain different pigments depending on the types. Colors of the ink composition 37 can be freely selected from, for example, black, white, cyan, magenta, yellow, green, red, and orange.

As the pigment, for example, an inorganic pigment or an organic pigment can be used.

Examples of the inorganic pigment include carbon blacks and white inorganic oxides. Examples of the carbon black include furnace black, lamp black, acetylene black, and channel black. Examples of the white inorganic oxide include iron oxide, titanium oxide, zinc oxide, and silica.

Examples of the organic pigment include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, isoindolinone pigments, azomethine pigments, and azo pigments.

### Treatment Liquid

The treatment liquid 38 contains a coagulant. The coagulant coagulates the ink composition 37 and the overcoat liquid 39. The treatment liquid 38 is a liquid that cures or thickens the ink composition 37 and the overcoat liquid 39.

The treatment liquid 38 of the present embodiment contains a polyvalent metal salt as the coagulant. The polyvalent metal salt is composed of a divalent or more polyvalent metal ion and an anion bonded to the polyvalent metal ion. The polyvalent metal salt is a water-soluble compound. Specifically, a calcium salt, a magnesium salt or the like can be used as the polyvalent metal salt.

### Overcoat Liquid

The overcoat liquid 39 contains resin. The overcoat liquid 39 is a liquid containing a component that protects an image recorded on the fabric 22. The overcoat liquid 39 enhances adhesion between the ink composition 37 and the fabric 22.

For example, the overcoat liquid 39 contains anionic resin particles. Examples of the anionic resin particles include resin particles having anionic properties among resin particles formed of a urethane-based resin, an acrylic-based resin, a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, an ethylene-vinyl acetate-based resin, a silicone-acrylic-based resin, and the like. The acrylic resin may be a styrene-acrylic resin.

### Fabric

As illustrated in FIG. 3, the fabric 22 is constituted by a plurality of yarns 41. For example, the fabric 22 is a woven fabric in which the plurality of yarns 41 are combined longitudinally and laterally. One yarn 41 is constituted by a plurality of fibers 42. For example, the yarn 41 is formed by twisting and spinning the plurality of fibers 42.

### Method for Recording on Fabric

When recording is performed on the fabric 22, the control unit 13 reciprocates the carriage 25 in the scanning direction X. The control unit 13 causes droplets of the treatment liquid 38, the ink composition 37, and the overcoat liquid 39 to be ejected from the moving ejecting unit 26. The control unit 13 may transport the fabric 22 at a time at which the carriage 25 turns back.

The ejecting unit 26 records an image on the fabric 22 by causing droplets to be ejected toward a plurality of points on the fabric 22. The ejecting unit 26 attaches the treatment liquid 38, the ink composition 37, and the overcoat liquid 39 to points on the fabric 22. The ejecting unit 26 sequentially attaches the droplets of the treatment liquid 38, the ink composition 37, and the overcoat liquid 39 to the fabric 22.

### Actions of First Embodiment

Actions of the first embodiment will be described.

As illustrated in FIG. 3, the ejecting unit 26 attaches a droplet of the treatment liquid 38 to the fabric 22. At this time, the ejecting unit 26 ejects the treatment liquid 38 for the small dot. A treatment droplet amount, which is a weight of the droplet of the treatment liquid 38, may be constant regardless of images. That is, the ejecting unit 26 attaches the droplet of the treatment liquid 38 for the small dot to each point of the fabric 22 regardless of images.

As illustrated in FIG. 4, the droplet of the treatment liquid 38 for the small dot is unlikely to penetrate deep into the fabric 22. Therefore, the treatment liquid 38 remains on a surface of the fabric 22.

Subsequently, the ejecting unit 26 attaches the droplet of the ink composition 37 to the fabric 22. At this time, the ejecting unit 26 ejects the ink composition 37 for any one of the small dot, the medium dot, and the large dot. An ink droplet amount, which is a weight of a droplet of the ink composition 37, may be changed in accordance with an image to be recorded. For example, a droplet for the small dot having a small ink droplet amount may be attached to a portion having a high luminance in an image. A droplet for the large dot having a large ink droplet amount may be attached to a portion having a low luminance in an image. The ejecting unit 26 performs ejection while setting the ink droplet amount to be equal to or larger than the treatment droplet amount. In other words, the ejecting unit 26 performs ejection while setting the treatment droplet amount to be equal to or less than the ink droplet amount.

As illustrated in FIG. 5, the ink composition 37 attached to the fabric 22 reacts with the treatment liquid 38 remaining on the surface of the fabric 22. Therefore, the ink composition 37 coagulates near the surface of the fabric 22. Fluidity of the coagulated ink composition 37 is reduced. Therefore, the ink composition 37 is unlikely to penetrate deep into the fabric 22 even when the ink droplet amount is large.

The ejecting unit 26 attaches the overcoat liquid 39 to the fabric 22 to which the treatment liquid 38 and the ink composition 37 are attached. At this time, the ejecting unit 26 ejects the overcoat liquid 39 for the small dot. A coating droplet amount, which is a weight of a droplet of the overcoat liquid 39, may be equal to or less than the ink droplet amount.

The overcoat liquid 39 attached to the fabric 22 reacts with the treatment liquid 38 remaining on the surface of the fabric 22. Therefore, the overcoat liquid 39 coagulates near the surface of the fabric 22. Fluidity of the coagulated overcoat liquid 39 is reduced. Therefore, the overcoat liquid 39 is likely to remain on the surface of the fabric 22.

The drying unit 16 evaporates moisture contained in the treatment liquid 38, the ink composition 37, and the overcoat liquid 39. The drying unit 16 dissolves the resin contained in the overcoat liquid 39. The resin is cooled and solidified after drying, thereby covering an image recorded on the fabric 22. Accordingly, the image recorded on the fabric 22 can be protected from a load such as friction.

### Effects of First Embodiment

Effects of the present embodiment will be described.
(1-1) In the recording device 11, the overcoat liquid 39 containing resin is used. Accordingly, the ink composition 37 having low viscosity can be used, and thus it is possible to suppress occurrence of clogging of the nozzle 29 for ejecting the ink composition 37. The treatment droplet amount is equal to or less than the ink droplet amount. A droplet having a small weight is more likely to remain on the surface of the fabric 22 than a droplet having a large weight. Therefore, the ink composition 37 and the overcoat liquid 39 can be coagulated near the surface of the fabric 22 by the treatment liquid 38 remaining near the surface. Accordingly, it is possible to suppress deterioration in adhesion between the pigment and the fabric 22, and in color developability. This makes it possible to suppress deterioration in recording quality.
(1-2) It is difficult to handle an organic acid, which is an example of the coagulant, because there is a risk of corroding metal. In this regard, the treatment liquid 38 contains a polyvalent metal salt. The polyvalent metal salt is a stable salt, thus can be easily handled.
(1-3) The coating droplet amount is equal to or less than the ink droplet amount. By making the overcoat liquid 39 likely to stay near the surface of the fabric 22, it is possible to easily cover the treatment liquid 38 and the ink composition 37 with the overcoat liquid 39.
(1-4) By changing the ink droplet amount depending on images, it is possible to easily express gradation. By making a droplet weight of the treatment liquid 38 constant regardless of images, a load of control can be reduced.

### Second Embodiment

Next, a second embodiment of the recording method and the recording device will be described with reference to the drawings. Note that the second embodiment is different from the first embodiment in a way of ejecting the treatment liquid. Further, since other points are substantially the same as those of the first embodiment, duplicate descriptions of the same configuration will be omitted while assigning the same reference signs to the same components.

The treatment droplet amount may be changeable. The treatment droplet amount can be changed within a range equal to or less than the ink droplet amount. Therefore, the treatment droplet amount is equal to or less than the ink droplet amount. For example, the treatment droplet amount may be changed according to at least one of the ink droplet amount and the coating droplet amount.

The treatment droplet amount may be changed according to an image to be recorded. A droplet of the treatment liquid 38 for the small dot and a droplet of the ink composition 37 for the small dot may be attached to a portion of an image having a high luminance. A droplet of the treatment liquid 38 for the medium dot and a droplet of the ink composition 37 for the large dot may be attached to a portion of an image having a low luminance.

When the overcoat liquid 39 for the small dot is ejected, the ejecting unit 26 may set a droplet of the treatment liquid 38 for the small dot. When the overcoat liquid 39 for the medium dot is ejected, the ejecting unit 26 may set a droplet of the treatment liquid 38 for the medium dot.

The drying unit 16 may dry the recorded fabric 22 under a drying condition according to the treatment droplet amount. For example, when the treatment droplet amount is small, the drying unit 16 may set a drying temperature to be lower than when the treatment droplet amount is large. When the treatment droplet amount is small, the drying unit 16 may set a drying time to be shorter than when the treatment droplet amount is large.

### Actions of Second Embodiment

Actions of the present embodiment will be described.

As compared to a droplet of the treatment liquid 38 for the large dot, a droplet of the treatment liquid 38 for the medium dot is less likely to penetrate deep into the fabric 22. Therefore, the ink composition 37 and the overcoat liquid 39 coagulate at a position near the surface of the fabric 22.

### Effects of Second Embodiment

Effects of the present embodiment will be described.
(2-1) The drying unit 16 changes a drying condition according to the treatment droplet amount. For example, when the treatment droplet amount is small, a drying time can be shortened or a drying temperature can be lowered. By shortening the drying time, a time required for recording can be shortened. By lowering the drying temperature or shortening the drying time, a load applied to the fabric 22 can be reduced.
(2-2) When the treatment liquid 38 is insufficient for amounts of the ink composition 37 and the overcoat liquid 39, there is a risk that the ink composition 37 and the overcoat liquid 39 cannot be sufficiently coagulated. There is a risk that the ink composition 37 and the overcoat liquid 39 which do not coagulate penetrate deep into the fabric 22. In this regard, the treatment droplet amount can be changed according to at least one of the ink droplet amount and the coating droplet amount. Therefore, by ejecting the treatment liquid 38 in an amount corresponding to the ink composition 37 and the overcoat liquid 39, it is possible to reduce a possibility that the ink composition 37 and the overcoat liquid 39 penetrate deep into the fabric 22.

### Modifications

The embodiments may be modified as follows for implementation. The embodiments and modifications described below may be combined for implementation insofar as they are not technically inconsistent.
- The treatment droplet amount may be changed according to a type of the fabric 22. For example, ease of liquid penetration into the fabric 22 varies depending on strength of the twist of the yarn 41. The penetration is less likely to occur in the yarn 41 having a strong twist as compared to the yarn 41 having a weak twist. The treatment droplet amount to be attached to the fabric 22 into which liquid easily penetrates may be smaller than the treatment droplet amount to be attached to the fabric 22 into which liquid hardly penetrates.
- The drying unit 16 may dry the fabric 22 under a drying condition according to the type of the fabric 22. For example, when the fabric 22 is vulnerable to heat, a drying temperature may be lowered.
- The ink droplet amount may be constant regardless of images.
- The coating droplet amount may be larger than the ink droplet amount.
- The recording device 11 may include a mechanism that attaches the overcoat liquid 39 to the fabric 22, separately from the ejecting unit 26. For example, the recording device 11 may include an application unit that applies the overcoat liquid 39 to the fabric 22. The recording device 11 may include a spraying unit that sprays the overcoat liquid 39 onto the fabric 22.
- The treatment liquid 38 may contain an organic acid as a coagulant. In this case, the treatment liquid 38 need not contain a polyvalent metal salt. Examples of the organic acid may include phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumaric acid, thiophenecarboxylic acid, nicotinic acid, derivatives of these compounds, and salts thereof.
- The fabric 22 may be, for example, a woven fabric, a knitted fabric, felt, a nonwoven fabric, or the like.
- The recording device 11 may be a line printer that can eject liquid over the fabric 22 in a width direction. The recording device 11 may be a garment printer that reciprocates the ejecting unit 26 in the scanning direction X and the transport direction Y.

### Definition

A representation "at least one" as used herein means "one or more" of desired options. As an example, a representation "at least one" as used herein means "only one option" or "both of two options" when the number of options is two. As another example, the representation "at least one" as used herein means "only one option", "any combination of two options", or "any combination of three or more options" when the number of options is three or more.

### Supplementary note

The following is a description of the technical ideas and their effects that can be grasped from the above-described embodiments and modifications.
(A) A recording method is a method for recording on a fabric, the recording method including attaching a droplet of a treatment liquid to the fabric, the treatment liquid containing a coagulant that coagulates an ink composition containing pigment and an overcoat liquid containing resin, attaching a droplet of the ink composition to the fabric, and attaching the overcoat liquid to the fabric, wherein a treatment droplet amount which is a weight of the droplet of the treatment liquid is equal to or less than an ink droplet amount which is a weight of the droplet of the ink composition.
   According to this method, the overcoat liquid containing the resin is used. According to this, since it is possible to use the ink composition having low viscosity, it is possible to suppress occurrence of clogging of a nozzle which ejects the ink composition. The treatment droplet amount is equal to or less than the ink droplet amount. A droplet having a small weight is more likely to remain on a surface of the fabric than a droplet having a large weight. Therefore, the ink composition and the overcoat liquid can be coagulated near the surface of the fabric by the treatment liquid remaining near the surface. Accordingly, it is possible to suppress deterioration in adhesion between the pigment and the fabric, and in color developability. This makes it possible to suppress deterioration in recording quality.
(B) In the recording method, the treatment liquid may contain a polyvalent metal salt.
   It is difficult to handle an organic acid, which is an example of the coagulant, because there is a risk of corroding metal. In this regard, according to this method, the treatment liquid contains the polyvalent metal salt. The polyvalent metal salt is a stable salt, thus can be easily handled.
(C) In the recording method, a coating droplet amount, which is a weight of a droplet of the overcoat liquid to be attached to the fabric, may be equal to or less than the ink droplet amount.
   According to this method, the coating droplet amount is equal to or less than the ink droplet amount. By making the overcoat liquid likely to stay near the surface of the fabric, it is possible to easily cover the treatment liquid and the ink composition with the overcoat liquid.
(D) In the recording method, the ink droplet amount may be changed according to an image to be recorded, and the treatment droplet amount may be constant regardless of the image.
   According to this method, by changing the ink droplet amount depending on images, it is possible to easily express gradation. By making a droplet weight of the treatment liquid constant regardless of the image, a load of control can be reduced.
(E) In the recording method, the treatment droplet amount may be changeable, and the method may further include drying the recorded fabric under a drying condition corresponding to the treatment droplet amount.
   According to this method, the drying condition is changed according to the treatment droplet amount. For example, when the treatment droplet amount is small, a drying time can be shortened or a drying temperature can be lowered. By shortening the drying time, a time required for recording can be shortened. By lowering the drying temperature or shortening the drying time, the load applied to the fabric can be reduced.
(F) A recording device includes an ejecting unit configured to eject a droplet of an ink composition containing pigment, wherein the ejecting unit is configured to eject a droplet of a treatment liquid containing a coagulant, the coagulant coagulates the ink composition and an overcoat liquid containing resin, a treatment droplet amount being a weight of the droplet of the treatment liquid is equal to or less than an ink droplet amount being a weight of the droplet of the ink composition, and the treatment liquid, the ink composition, and the overcoat liquid are attached to a fabric in this order.

According to this configuration, the same effect as that of the recording method described above can be obtained.

## Claims

1. A recording method is a method for recording on a fabric, the recording method comprising:
attaching a droplet of a treatment liquid to the fabric, the treatment liquid containing a coagulant that coagulates an ink composition containing pigment and an overcoat liquid containing resin;
attaching a droplet of the ink composition to the fabric; and
attaching the overcoat liquid to the fabric, wherein
a treatment droplet amount being a weight of the droplet of the treatment liquid is equal to or less than an ink droplet amount being a weight of the droplet of the ink composition.

2. The recording method according to claim 1, wherein
the treatment liquid contains a polyvalent metal salt.

3. The recording method according to claim 1, wherein
a coating droplet amount being a weight of a droplet of the overcoat liquid to be attached to the fabric is equal to or less than the ink droplet amount.

4. The recording method according to claim 1, wherein
the ink droplet amount is changed in accordance with an image to be recorded, and
the treatment droplet amount is constant regardless of the image.

5. The recording method according to claim 1, wherein
the treatment droplet amount is changeable, and
drying the recorded fabric under a drying condition corresponding to the treatment droplet amount is further included.

6. A recording device comprising an ejecting unit configured to eject a droplet of an ink composition containing pigment, wherein
the ejecting unit is configured to eject a droplet of a treatment liquid containing a coagulant,
the coagulant coagulates the ink composition and an overcoat liquid containing resin,
a treatment droplet amount being a weight of the droplet of the treatment liquid is equal to or less than an ink droplet amount being a weight of the droplet of the ink composition, and
the treatment liquid, the ink composition, and the overcoat liquid are attached to a fabric in this order.
